# EUROPEAN PATENT APPLICATION

(11) **EP 0 902 282 A2**
(43) Date of publication of application: **17.03.1999**
(21) Application number: 98307209.1
(22) Date of filing: 07.09.1998
(51) Int. Cl.: G01N 29/26, G01N 27/90

(54) **Device for inspecting tubes**

(30) Priority: 08.09.1997 GB 9718953; 21.08.1998 GB 9818251
(71) Applicant: Frank's Tubulars International Limited, Altens, Aberdeen AB12 3LY (GB)
(72) Inventor: Robb, Eden Smally, Bridge of Don, Aberdeen (GB)
(74) Representative: Pattullo, Norman

(57) **Abstract**

A tubular inspection device, which is preferably mobile, is described as comprising an ultrasonic tubular inspection means, preferably in the form of a first moveable sensor head, which is coupled to the device, and preferably further comprises an electro-magnetic tubular inspection means, which is also coupled to the device, and which is in the form of a second moveable sensor head. The ultrasonic and electro-magnetic inspection means are typically capable of inspecting the integrity of a tubular, such as a tubular used in downhole applications such as drillpipe, tubing and casing. A rotation mechanism, preferably in the form of a roller unit, is also coupled to the device and which can provide relative rotation between a tubular to be inspected and the ultrasonic and electro-magnetic tubular inspection means. Transportation means are also provided to permit the device to be moved, and which may be in the form of attachment points to which ropes and the like may be coupled to permit the device to be lifted by, for example, a crane.

## Description

The present invention relates to a tubular inspection unit, and more particularly but not exclusively, to a mobile tubular inspection unit for inspecting lengths of Oil field and Country Tubular Goods (OCTG) standard tubulars used in downhole applications such as drillpipe, tubing and casing.

Conventionally, tubulars such as drillpipe used in drilling for oil, gas or water, require to be inspected at regular intervals to ensure that any defects in the drillpipe such as longitudinal or transverse defects or deviations such as the thinning of the drillpipe wall thickness and scarring to the drillpipe wall are within industry standards.

In order for the drillpipe to be inspected, the drillpipe must be removed from the environment in which it is used, such as an offshore drilling platform, to an onshore factory, since the inspection equipment is extremely complex and massive, and is firmly secured to the factory floor. The inspection of the tubulars is done by Ultrasonic Inspection (UI) and/or Electro-Magnetic Inspection (EMI) using well known techniques.

Accordingly, conventional inspection of tubulars is very expensive primarily due to the transportation costs involved in moving the tubulars from their in use environment to the factory inspection facility and back to the in use environment.

According to a first aspect of the present invention, there is provided a mobile tubular inspection device comprising:-
an ultrasonic tubular inspection means coupled to the mobile tubular inspection device;
a rotation mechanism for providing relative rotation between a tubular to be inspected and the ultrasonic tubular inspection means; and
transportation means to permit the device to be moved.

According to a second aspect of the present invention, there is provided a method of inspecting a tubular, the method comprising:-
transporting a tubular inspection device to a location in relatively close proximity to a site where the tubular to be inspected is situated, the tubular inspection device having an ultrasonic inspection means associated therewith;
operating a rotation mechanism associated with the tubular inspection device to provide for relative rotation between the tubular and the ultrasonic inspection means, the ultrasonic inspection means permitting analysis of defects of the tubular.

According to a third aspect of the present invention, there is provided a method of inspecting a tubular, the method comprising:-
providing a tubular inspection device;
the tubular inspection device having an ultrasonic inspection means associated therewith;
the tubular inspection device further having an electromagnetic inspection means associated therewith;
operating a rotation mechanism associated with the tubular inspection device to provide for relative rotation between the tubular and the ultrasonic inspection means, and the electromagnetic inspection means, the ultrasonic and the electromagnetic inspection means as required permitting analysis of defects of the tubular.

Preferably, the rotation mechanism is coupled to the tubular inspection device.

Preferably, the ultrasonic tubular inspection means is operable, to inspect the tubular, around the longitudinal axis of the tubular. Typically, the device is in the form of a container which, preferably, is moveable by means of a vehicle which may be an articulated truck. Typically, the device further comprises a frame.

Preferably, the ultrasonic tubular inspection means is coupled to the frame, and more preferably, the ultrasonic tubular inspection means is movably coupled to the frame.

The transportation means may comprise attachment points to which ropes and the like may be coupled to permit the frame to be lifted by a lifting means which may be a crane or the like. Alternatively, or in addition, the transportation means may comprise wheels to permit the frame to be moved by a vehicle.

Preferably, the tubular inspection device further comprises a support member onto which the tubular is placed prior to being inspected.

Preferably, the rotation mechanism is engageable with the tubular to provide rotation thereto, such that the rotation mechanism provides the relative rotation between the tubular to be inspected and the ultrasonic tubular inspection means. Typically, the tubular inspection device further comprises a displacement mechanism for providing relative movement between the tubular and the support member, such that during rotation of the tubular by the rotation mechanism, the tubular is typically supported by the rotation mechanism and the tubular is unsupported by the support member.

Typically, the ultrasonic tubular inspection means is moveable substantially along the length of the tubular.

Typically, the tubular inspection device further comprises a support arm onto which the tubular is placed prior to being supported by the support member. Preferably, the support arm extends from the frame and more preferably, the support arm extends substantially horizontally from the frame. Preferably, the support arm is hinged to the frame and is moveable from an unextended and unoperating configuration to an extended and operating configuration.

Preferably, the tubular inspection device further comprises a tubular movement mechanism which provides for movement of the tubular along its longitudinal axis. Preferably, the tubular movement mechanism is capable of moving the tubular to and from a position in which one of the ends of the tubular is in contact with a rotatable plate.

Typically, the tubular movement mechanism is moved into and out of engagement with the tubular by a displacement mechanism, and typically, when the tubular is engaged with the tubular movement mechanism, the tubular is unsupported by the support member.

Preferably, the tubular rotation mechanism is moved into and out of engagement with the tubular by a displacement mechanism which is preferably the same displacement mechanism as that of the tubular movement mechanism.

Preferably, the displacement mechanism includes an elongate member comprising upsets thereon such that when the elongate member is moved, the upsets engage either of the tubular rotation mechanism and the tubular movement mechanism to move the respective mechanism into engagement with the tubular, as desired.

### Preferably, the tubular is an OCTG product.

According to a fourth aspect of the present invention, there is provided a mobile tubular inspection device comprising:-
an electro-magnetic tubular inspection means coupled to the mobile tubular inspection device;
a rotation mechanism to provide rotation to a tubular to be inspected; and
transportation means to permit the device to be moved.

According to a fifth aspect of the present invention, there is provided a method of inspecting a tubular, the method comprising:-
transporting a tubular inspection device to a location in relatively close proximity to a site where the tubular to be inspected is situated, the tubular inspection device having an electro-magnetic inspection means associated therewith;
operating a rotation mechanism associated with the tubular inspection device to provide for rotation of the tubular, the electro-magnetic inspection means permitting analysis of defects of the tubular.

Preferably, the electro-magnetic tubular inspection means is operable, to inspect the tubular, around the longitudinal axis of the tubular. Typically, the device is in the form of a container which, preferably, is moveable by means of a vehicle which may be an articulated truck. Typically, the device further comprises a frame.

Preferably, the electro-magnetic tubular inspection means is coupled to the frame, and more preferably, the electro-magnetic tubular inspection means is movably coupled to the frame.

The transportation means may comprise attachment points to which ropes and the like may be coupled to permit the frame to be lifted by a lifting means which may be a crane or the like. Alternatively, or in addition, the transportation means may comprise wheels to permit the frame to be moved by a vehicle.

Preferably, the mobile tubular inspection device further comprises a support member onto which the tubular is placed prior to being inspected.

Preferably, the rotation mechanism is engageable with the tubular to provide rotation thereto, such that the rotation mechanism provides relative rotation between the tubular to be inspected and the electro-magnetic tubular inspection means. Typically, the mobile tubular inspection device further comprises a displacement mechanism for providing relative movement between the tubular and the support member, such that during rotation of the tubular by the rotation mechanism, the tubular is typically supported by the rotation mechanism and the tubular is unsupported by the support member.

Typically, the electro-magnetic tubular inspection means is moveable substantially along the length of the tubular.

Typically, the mobile tubular inspection device further comprises a support arm onto which the tubular is placed prior to being supported by the support member. Preferably, the support arm extends from the frame and more preferably, the support arm extends substantially horizontally from the frame. Preferably, the support arm is hinged to the frame and is moveable from an unextended and unoperating configuration to an extended and operating configuration.

Preferably, the mobile tubular inspection device further comprises a tubular movement mechanism which provides for movement of the tubular along its longitudinal axis. Preferably, the tubular movement mechanism is capable of moving the tubular to and from a position in which one of the ends of the tubular is in contact with a rotatable plate.

Typically, the tubular movement mechanism is moved into and out of engagement with the tubular by a displacement mechanism, and typically, when the tubular is engaged with the tubular movement mechanism, the tubular is unsupported by the support member.

Preferably, the tubular rotation mechanism is moved into and out of engagement with the tubular by a displacement mechanism which is preferably the same displacement mechanism as that of the tubular movement mechanism.

Preferably, the displacement mechanism includes an elongate member comprising upsets thereon such that when the elongate member is moved, the upsets engage either of the tubular rotation mechanism and the tubular movement mechanism to move the respective mechanism into engagement with the tubular, as desired.

### Preferably, the tubular is an OCTG product.

An embodiment of a tubular inspection device will now be described, by way of example only, with reference to the accompanying drawings, in which:-
Fig. 1 is a side view of a mobile tubular inspection device in a transportation configuration;
Fig. 2 is an end view of the device of Fig. 1;
Fig. 3 is a plan view of the device of Fig. 1 whilst it is being transformed into an in use configuration;
Fig. 4 is a plan view of the floor of the device of Fig. 1;
Fig. 5 is an end view of the device of Fig. 1 in an unused configuration;
Fig. 6 is a side view of an ultrasonic inspection sensor head and an electromagnetic inspection sensor head during inspection of a tubular by the mobile tubular inspection device of Fig.1 in an in use configuration;
Fig. 7 is an end view of the ultrasonic inspection sensor head of Fig. 6;
Fig. 8 is a side view of a cam plate of the device of Fig. 1;
Fig. 9 is an end view of a pipe rotator of the device of Fig. 1;
Fig. 10 is a side view of the pipe rotator of Fig. 9;
Fig. 11 is an end view of a cam bar support of the device of Fig. 1;
Fig. 12 is an end view of a pipe longitudinal roller of the device of Fig. 1;
Fig. 13 is a side view of the pipe longitudinal roller of Fig. 12;
Fig. 14 is an end view of the electromagnetic inspection sensor head of Fig. 6;
Fig. 15 is an end view of the electromagnetic inspection head of Figs. 6 and 14 in more detail;
Fig. 16 is a schematic perspective view of the electromagnetic sensor head of Figs. 6, 14 and 15; and
Fig. 17 is an end view of the electromagnetic inspection sensor head of Figs. 6, 14, 15 and 16 in isolation.

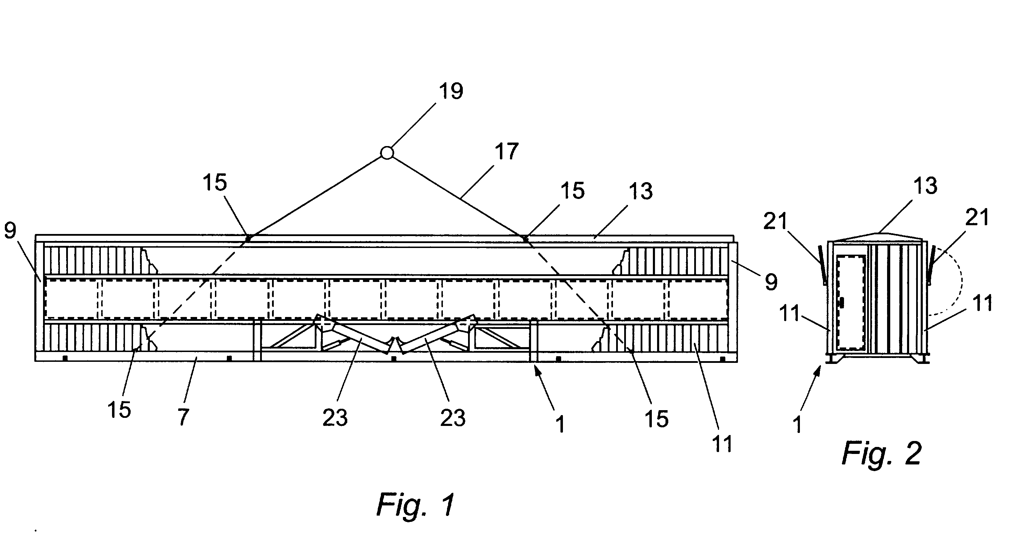

Fig. 1 shows a mobile pipe inspection unit 1, where the unit 1 has an outer steel frame 3 formed from a number of steel beams 5. The frame 3 has a floor section 7, two end sections 9, two side walls 11 and a roof 13. Four rope attachment points 15 are provided on both side walls 11 of the unit 1, where the two lower attachment points 15 are secured to the floor section 7 and the two upper attachment points 15 are secured to the roof 13. A wire rope 17 is secured to the attachment points 15 and a hook 19 is formed on the wire rope 17 such that the unit 1 can be lifted by crane (not shown). The unit 1 would normally be placed on the ground in use, or could be secured on a lorry trailer in use or only whilst being transported.

Shutters 21 are formed in the side walls 11, and can be lifted upwards (as shown in Fig. 2) to allow access to the interior of the unit 1.

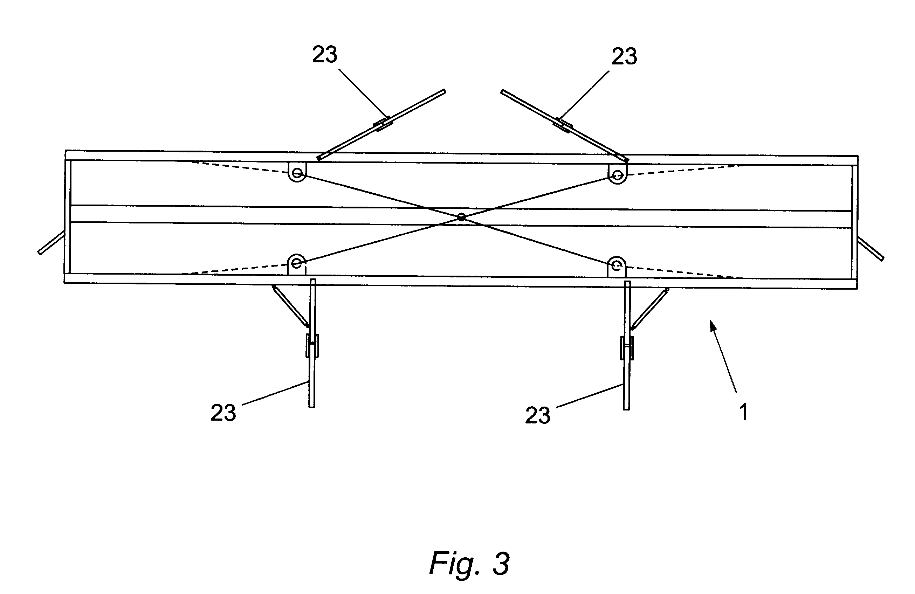

Fig. 3 shows that two pipe-collecting arms 23 are provided on both side walls 11 and are stowed flush to the side walls 11 during transportation. However, in use of the unit 1, the pipe-collecting arms 23 are rotated about their hinges to extend perpendicularly to, and horizontally from, the side walls 11. The unit 1 is approximately 48 feet long in order to receive the longest length of drillpipe used, and is approximately 8 feet high and approximately 6 feet wide.

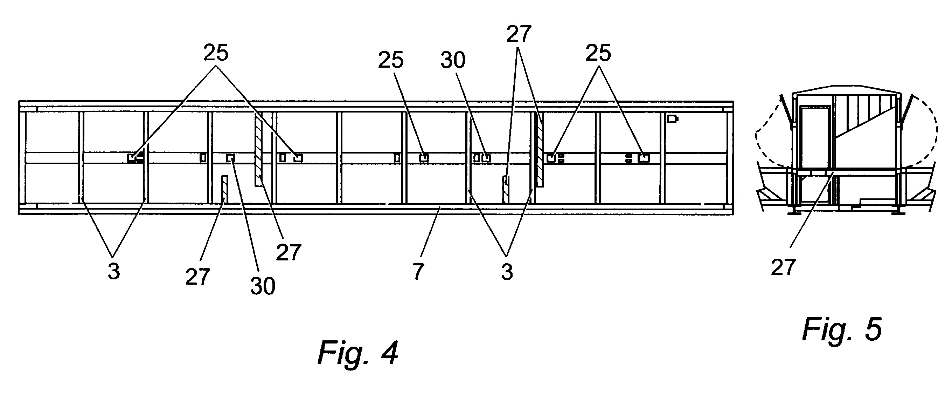

Fig. 4 shows the floor section 7 where there are a number of rotator roller units 25 spaced along the length of the central axis of the unit 1. There are also two pipe movement rollers 30 spaced apart on the central axis of the unit 1. Pipe support beams 27 are arranged parallel to the extended pipe collecting arms 23.

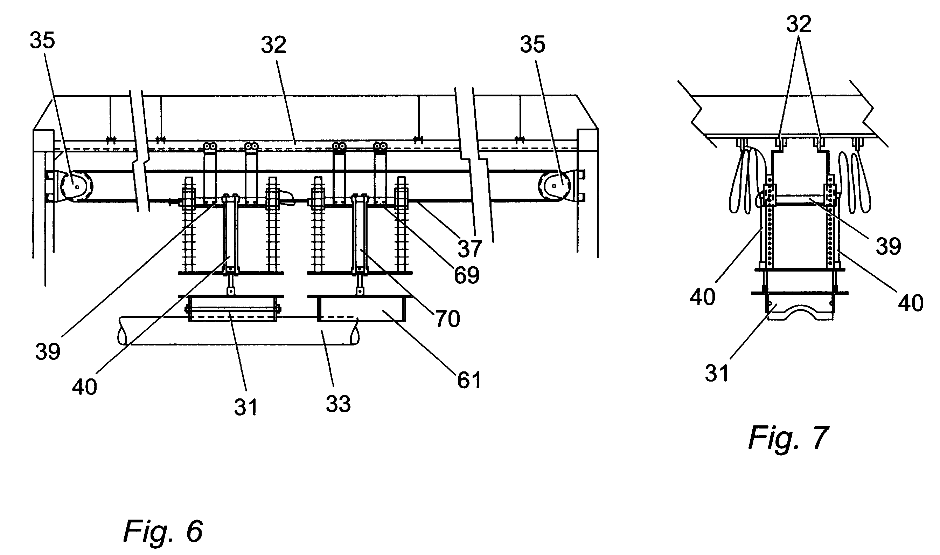

Fig. 6 shows a first sensor head inspection unit 31 in close proximity to a drillpipe 33 which is being inspected. An ultrasonic transducer is mounted within the first sensor head 31 and an example of a suitable unit 31 is produced by the PANAMETRIX Company of the United States of America. The first sensor head 31 is slung from a track 32, which runs the length of the unit 1, and is moveable along the length of the track 32 by operation of a pulley 35 and rope 37 arrangement, where the rope 37 is coupled to a basket 39. The first sensor head 31 can be lifted or lowered with respect to the basket 39 by means of a pair of air cylinders 40.

Fig. 6 also shows a second sensor head inspection unit 61 in close proximity to the drill pipe 33 which is being inspected. An electromagnetic inspection system in the form of an electromagnetic head 63 is mounted on the second sensor head 61, and will be described subsequently in more detail. The second sensor head 61 is also slung from the track 32, and is also moveable along the length of the track 32 by operation of the pulley 35 and rope 37 arrangement, where the rope 37 is coupled to a similar basket 69. The second sensor head 61 can also be lifted or lowered with respect to the basket 69 by means of a pair of air cylinders 70. Therefore, both baskets 39, 69 will move in synchronism with one another due to any movement of the rope 37 in the direction along the length of the track 32.

However, the vertical movement of the respective first 31 and second 61 sensor heads is independent from one another due to the independent respective pair of air cylinders 40, 70, and this provides flexibility of tubular inspection operations, in that either inspection unit 31, 61 can be operated in isolation from the other, or both first 31 and second 61 sensor head inspection units can be operated at the same time. Thus, the first 31 and second 61 sensor head inspection units are moveable in either axial direction with respect to the tubular 33 by moving the rope 37, and are also moveable independently of one another 31, 61 in either radial direction of the tubular 33 by operation of the respective pairs of pistons 40, 70.

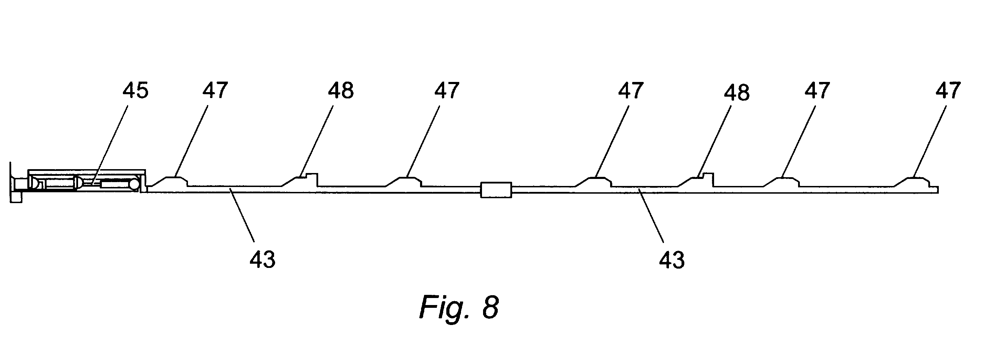

A cam plate 43 is shown in Fig. 8 and is located along the central axis on the floor section 7. The cam plate 43 is moveable along the central axis by means of a hydraulic cylinder which is connected to one end of the cam plate 43. The cam plate 43 comprises five upwardly projecting upsets 47 which are spaced along its length. There are also two upwardly projecting upsets 48 which are spaced apart. The cam plate 43 is arranged on the floor 7 such that when it is moved in one direction, the upsets 47 engage a lower face of the rotator roller units 25 and move them upwardly to engage the drill pipe 33. The upsets 48 are arranged such that when the cam plate 43 is moved in the other direction they engage the pipe movement rollers 30 by moving them upwardly.

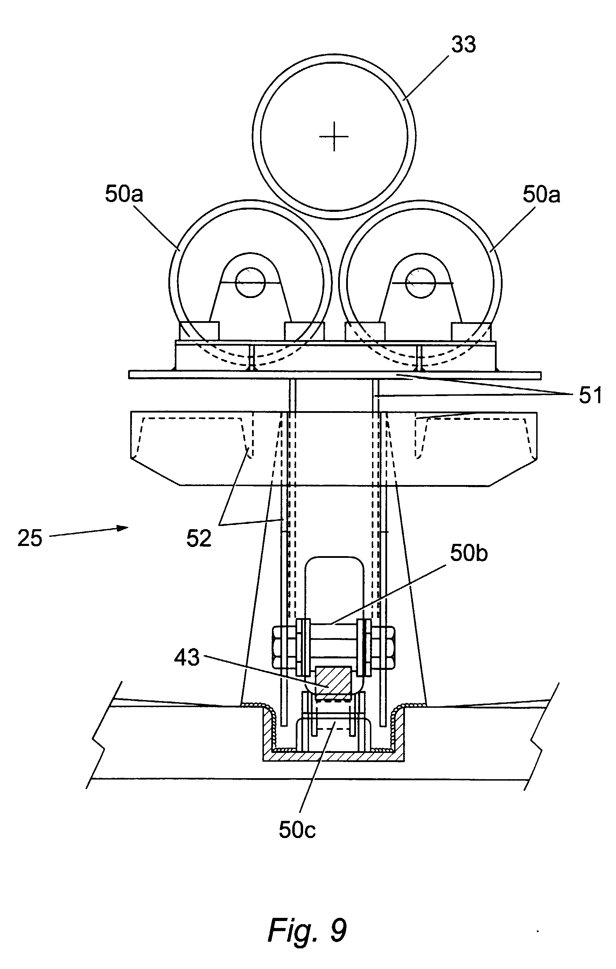

Fig. 9 shows a rotator roller unit 25, where the drillpipe 33 is shown, in phantom, as being engaged by the rotator roller unit 25, which comprises two pipe rollers 50A which are coupled to an upper member 51 which is moveable with respect to a lower member 52. It should be noted that at least one of the pipe rollers 50A of at least one of the rotator roller units 25 is driven by a hydraulic motor drive (not shown). A free wheeling roller 50B is mounted at the lower end of the upper member 51, where this free wheeling roller's 50B axle 54 is engaged in a slot 55 cut out of the lower member 52. The single free wheeling roller 50B is in contact with the upper face of the cam plate 43. Thus, when the cam plate 43 is moved such that the upset 47 is moved toward the rotator roller unit 25, the contact between the upset 47 and the roller 50B moves the upper member 51 upwards. Thus, the two rollers 50A engage with, and support, the drillpipe 33.

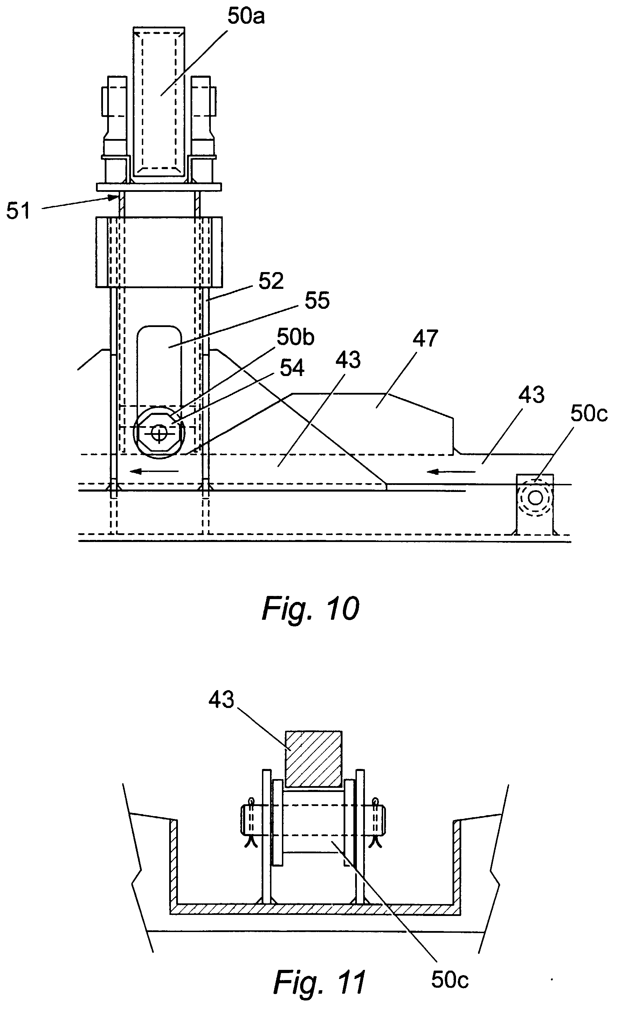

Fig. 11 shows that the cam plate 43 is itself supported, at spaced apart points along its length, by a free wheeling roller 50C arrangement.

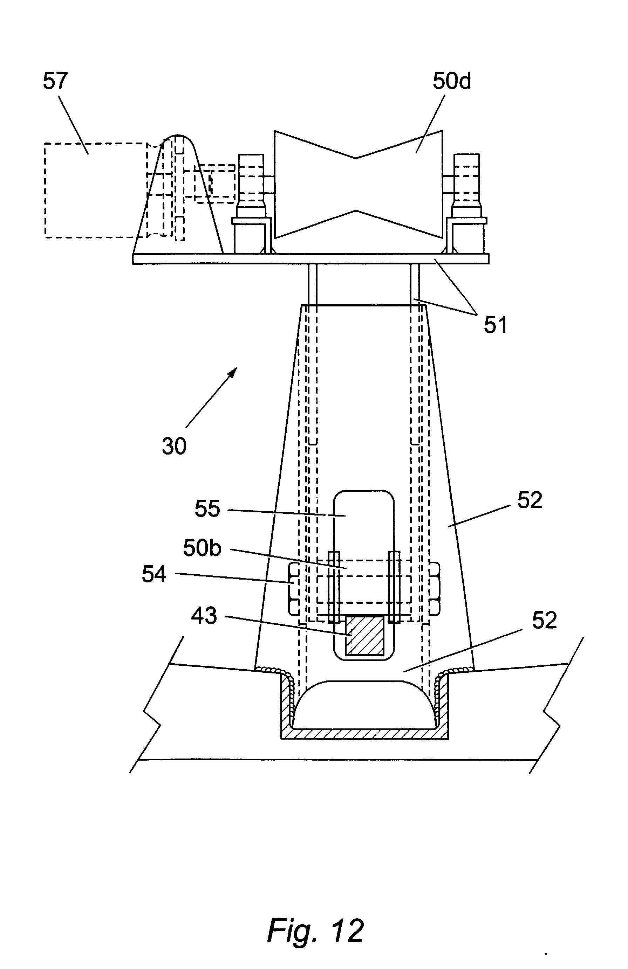

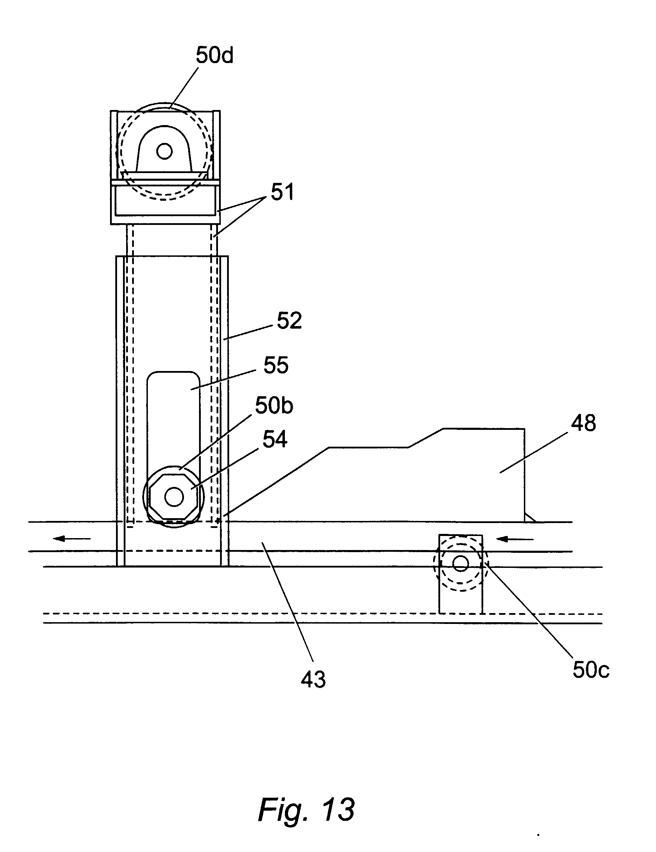

The pipe movement rollers 30 are shown in Figs. 12 and 13 as comprising a single roller 50D. However, the roller 50D is powered by a hydraulic motor drive 57. The pipe movement roller 30 is arranged in a similar fashion to the rotator roller units 25 in that they comprise an upper 51 and a lower 52 member, a free wheeling roller 50B, an axle 54 and a slot 55. Thus, when the cam plate 43 is moved such that the upset 48 is moved towards the pipe movement roller 30, the upper member 51, and thus the roller 50D is moved upwardly into engagement with the pipe 33. The hydraulic motor drive 57 can be operated to move the pipe 33 along its longitudinal axis.

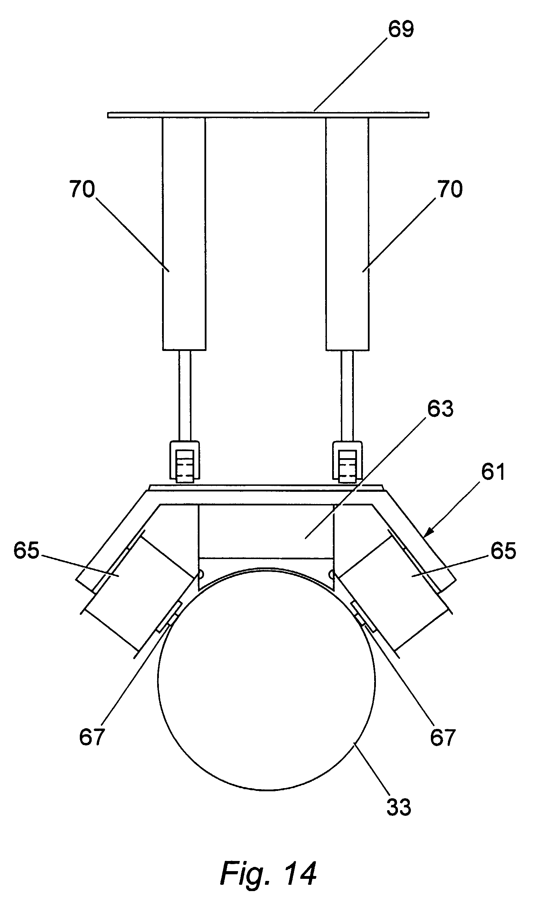

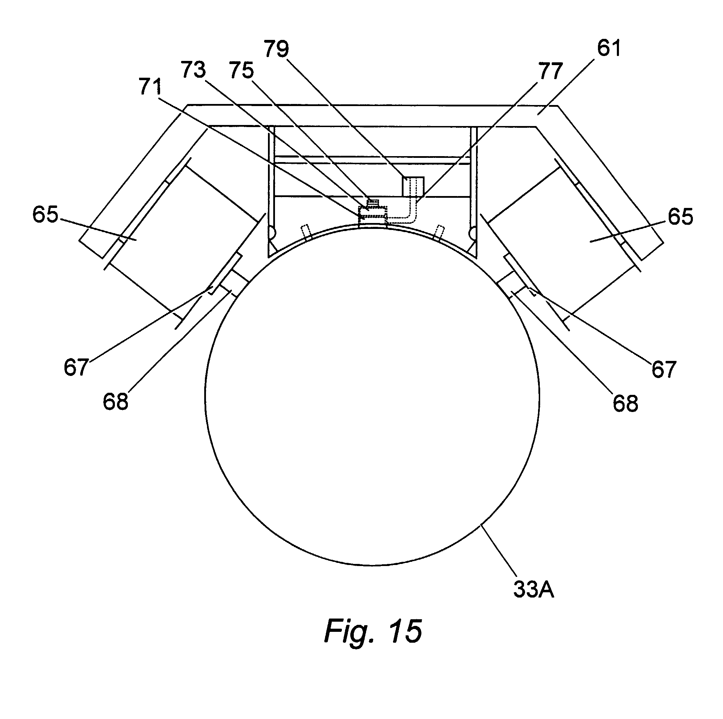

The second sensor head inspection unit 61 is shown in more detail in Figs. 14 and 15, where it is shown to be inspecting the tubular 33. An electromagnetic inspection (EMI) head 63 is mounted on the underside of the second sensor head inspection unit 61, where the lower surface of the EMI head 63 has a substantially curved profile, and preferably the curved profile has a radius which substantially matches the radius of the tubular 33. The EMI head 63 is preferably formed from a non-metallic material, and may be formed from a plastic material such as nylon. A selectively operable electromagnetic coil 65 is mounted on either side of the second sensor head inspection unit 61, and are provided with pins 67 which are intended to make contact with the outer surface of the tubular 33. The arrangement of the coils 65 and the contact between the pins 67 and the tubular 33 is preferably arranged such that the lowermost portion of the coil 65 is vertically higher than the centre longitudinal axis of the tubular 33. This provides the advantage that the coils 65 do not interfere with the pipe rollers 50A when the second sensor inspection unit 61 is moving along the length of the track 32.

As shown in Fig. 15, an extension arm 69 can be provided to extend the reach of the pin 67 so that the second sensor head inspection unit 61 can be used to inspect tubulars having a smaller diameter than that shown in Fig. 14, where a smaller diameter tubular 33A is shown in Fig. 15.

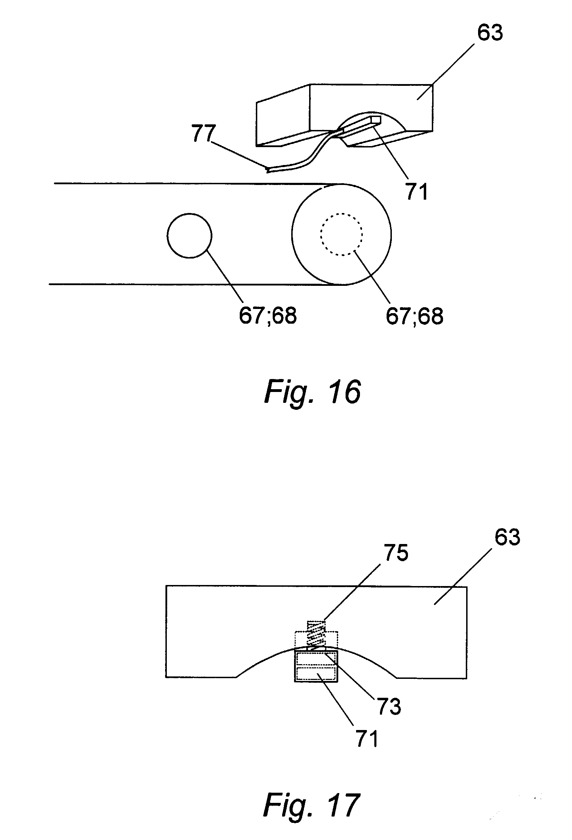

As shown in Fig. 15, and more clearly in Figs. 16 and 17, the EMI head 63 is provided with an EMI shoe 71 which is coupled to the lower surface of the EMI head 63 via a plate 73 which is preferably formed from a non-metallic material such as a plastic, which may be nylon. The plate 73, and thus the shoe 71 are biased downwardly toward the tubular 33 by a coil spring 75, and a shoe lead 77 is electrically coupled at one end to the EMI shoe 71. The other end of the shoe lead 77 is electrically coupled to a connection plug 79 which is further electrically coupled to an appropriate inspection monitoring apparatus, which will be detailed subsequently.

An example of a suitable EMI shoe is product no 20777-M which is offered by the Tubular Inspection Products company of the USA.

Thus, when the second sensor head inspection unit 61 is moved downwardly so that the pins 67 (or extension arms 68 if present) are in contact with the tubular 33. The second sensor head 61 is arranged so that the shoe 71 is also in engagement with the tubular 33 so that the EMI shoe 71 is pushed back into a rectangular recess formed on the lower surface of the substantially curved portion of the EMI head 63, so that the shoe 71 only protrudes by a relatively small margin, for instance ¾ inch.

Thus, when the electromagnetic coils 65 are energised, the EMI shoe will pick up the electromagnetic field created by the coil 65, and thus, via the shoe lead 77, defects in the tubular 33 can be detected by the appropriate inspection monitoring apparatus.

The pins 67 act to centralise the second sensor head inspection unit 61 on the tubular 33, since the second sensor head inspection unit 61 may move from side to side due to magnetism effects or vibration caused by the rotating tubular 33. However, the pins 67 permit the second sensor head inspection unit 61 to move axially with respect to the tubular 33.

In use of the mobile pipe inspection unit 1, the unit 1 is transported to the environment in which the pipes requiring inspection are used. The pipe 33 is placed onto the pipe collecting arms 23 and is rolled into the interior of the unit 1, so that it comes to rest on the pipes support beams 27 over the central axis of the unit 1, and thus the pipe 33 is supported thereby. The cam plate 43 is moved in the direction such that the upsets 48 engage the pipe movement rollers 30. The hydraulic motor drive 57 can then be operated to move the pipe horizontally along its longitudinal axis until one end of the pipe makes contact with a free wheeling rotatable plate (not shown) which is rotatably coupled to one end section 9 of the frame 3. The free wheeling rotatable plate prevents the pipe 33 from moving outwith the frame 3 when the pipe 33 is rotated.

The cam plate 43 can then be moved in the other direction such that the pipe movement rollers 30 are disengaged from the pipe 33 and the rotator roller units 25 engage the pipe 33. After this has occurred, the rotator roller units 25 rotate the pipe 33.

With either the first 31, second 61, or both sensor heads 31, 61 located at a suitable height just above the pipe 33, the sensor heads 31, 61 can be moved along the length of the pipe 33, and thus an inspection of the pipe 33 is achieved.

A water trough 61 is formed in the floor section 7 along the central axis beneath the cam plate 43. The two halves 63A, B of the floor section 7 either side of the water trough 61 are angled toward the trough 61, to provide for water, which is sprayed onto the pipe 33 during use of the first sensor head 31 to create a higher definition inspection, to run off the floor section 7 into the trough 61, where it is collected.

However, during use of the second sensor head 61, it is preferred that water is not sprayed onto the pipe 33 before, or as it is inspected. Therefore, if both the first 31 and the second 61 sensor heads are used to inspect the pipe 33 simultaneously, then it is preferred that the sensor heads 31, 61 are moved axially along the pipe 33 with the second sensor head 61 inspecting a section of the pipe 33 before the first sensor head 31; this movement would be shown by left to right movement of the two sensor heads 31, 61 as depicted in Fig. 6.

Therefore, the mobile pipe inspection unit 1 provides the advantages that either an ultrasonic inspection of a tubular 33, or an electromagnetic inspection of a tubular 33, or both simultaneously, can be carried out on a tubular 33. This provides greater time, commercial, and energy savings. Further, with the mobile tubular inspection unit 1 being able to conduct, either separately or combined, ultrasonic inspection and electromagnetic inspection, the advantages of provided by conducting ultrasonic inspection are combined with the advantages of conducting an ultrasonic inspection.

The output from the first 31 and second 61 sensor head inspection units is transferred into a control cabin (not shown) which is located outwith the mobile tubular inspection unit 1, and which has appropriate inspection monitoring equipment in the form of analysis equipment, such as oscilloscopes, chart paper and/or computers to inspect any defects in the tubulars 33. A power pack cabin (not shown) is also located outwith the mobile tubular inspection unit 1 in order to provide power to the unit 1, and to the control cabin. The power pack unit required should be capable of delivering substantial power requirements, which may typically be in the region of 60 amps and 415 volts.

Modifications and improvements may be made without departing from the scope of the invention. For example, and to aid transportation of the mobile pipe inspection unit 1, a 5 foot long end section (not shown) could be telescopingly coupled to either end of a slightly shorter, for instance 40 foot, floor section 7 than that shown in the Figs. This would provide the advantage that the mobile pipe inspection unit 1 is more compact during transportation, and can be telescopingly lengthened, by extending the two end sections outwards, for it's in use configuration.

## Claims

1. A mobile tubular inspection device comprising an ultrasonic tubular inspection means coupled to the mobile tubular inspection device;
a rotation mechanism for providing relative rotation between a tubular to be inspected and the ultrasonic tubular inspection means; and
transportation means to permit the device to be moved.

2. A mobile tubular inspection device according to claim 1, wherein the ultrasonic tubular inspection means is operable, to inspect the tubular, around the longitudinal axis of the tubular.

3. A mobile tubular inspection device according to either of claims 1 or 2, wherein the device is in the form of a container.

4. A mobile tubular inspection device according to claim 3, wherein the device further comprises a frame and the container is mounted on the frame.

5. A mobile tubular inspection device according to claim 4, wherein the transportation means comprise attachment points to which ropes and the like may be coupled to permit the frame to be lifted by a lifting means.

6. A mobile tubular inspection device according to either of claims 4 or 5, wherein the transportation means comprise wheels mounted on the frame to permit the frame to be moved by a vehicle.

7. A mobile tubular inspection device according to any of claims 4 to 6, wherein the mobile tubular inspection device further comprises a support member mounted on the frame onto which the tubular is placed prior to being inspected.

8. A mobile tubular inspection device according to any preceding claim, wherein the rotation mechanism is engageable with the tubular to provide rotation thereto, such that the rotation mechanism provides the relative rotation between the tubular to be inspected and the ultrasonic tubular inspection means.

9. A mobile tubular inspection device according to claim 8, wherein the mobile tubular inspection device further comprises a displacement mechanism for providing relative movement between the tubular and the support member, such that during rotation of the tubular by the rotation mechanism, the tubular is supported by the rotation mechanism and the tubular is unsupported by the support member.

10. A mobile tubular inspection device according to any preceding claim, wherein the ultrasonic tubular inspection means is moveable substantially along the length of the tubular.

11. A mobile tubular inspection device according to any of claims 7 to 10, further comprising a support arm onto which the tubular is placed prior to being supported by the support member.

12. A mobile tubular inspection device according to claim 11, wherein the support arm extends from the frame.

13. A mobile tubular inspection device according to any of claims 4 to 12, further comprising a tubular movement mechanism which provides for movement of the tubular, with respect to the frame, along its longitudinal axis.

14. A mobile tubular inspection device according to any preceding claim, further comprising an electro-magnetic inspection means coupled to the mobile tubular inspection device.

15. A method of inspecting a tubular, the method comprising:- transporting a tubular inspection device to a location in relatively close proximity to a site where the tubular to be inspected is situated, the tubular inspection device having an ultrasonic inspection means associated therewith; operating a rotation mechanism associated with the tubular inspection device to provide for relative rotation between the tubular and the ultrasonic inspection means, the ultrasonic inspection means permitting analysis of defects of the tubular.

16. A method of inspecting a tubular, the method comprising:-
providing a tubular inspection device;
the tubular inspection device having an ultrasonic inspection means associated therewith;
the tubular inspection device further having an electromagnetic inspection means associated therewith;
operating a rotation mechanism associated with the tubular inspection device to provide for relative rotation between the tubular and the ultrasonic inspection means, and the electromagnetic inspection means, the ultrasonic and the electromagnetic inspection means as required permitting analysis of defects of the tubular.

17. A mobile tubular inspection device comprising:-
an electro-magnetic tubular inspection means coupled to the mobile tubular inspection device;
a rotation mechanism to provide rotation to a tubular to be inspected; and
transportation means to permit the device to be moved.

18. A mobile tubular inspection device according to claim 17, wherein the electro-magnetic tubular inspection means is operable, to inspect the tubular, around the longitudinal axis of the tubular.

19. A mobile tubular inspection device according to either of claims 17 or 18, wherein the device is in the form of a container.

20. A mobile tubular inspection device according to claim 19, wherein the device further comprises a frame and the container is mounted on the frame.

21. A mobile tubular inspection device according to claim 20, wherein the transportation means comprise attachment points to which ropes and the like may be coupled to permit the frame to be lifted by a lifting means.

22. A mobile tubular inspection device according to either of claims 20 or 21, wherein the transportation means comprise wheels mounted on the frame to permit the frame to be moved by a vehicle.

23. A mobile tubular inspection device according to any of claims 20 to 22, wherein the mobile tubular inspection device further comprises a support member mounted on the frame onto which the tubular is placed prior to being inspected.

24. A mobile tubular inspection device according to any of claims 17 to 23, wherein the rotation mechanism is engageable with the tubular to provide rotation thereto, such that the rotation mechanism provides the relative rotation between the tubular to be inspected and the electro-magnetic tubular inspection means.

25. A mobile tubular inspection device according to either of claims 23 or 24, wherein the mobile tubular inspection device further comprises a displacement mechanism for providing relative movement between the tubular and the support member, such that during rotation of the tubular by the rotation mechanism, the tubular is supported by the rotation mechanism and the tubular is unsupported by the support member.

26. A mobile tubular inspection device according to any of claims 17 to 25, wherein the electro-magnetic tubular inspection means is moveable substantially along the length of the tubular.

27. A mobile tubular inspection device according to any of claims 23 to 26, further comprising a support arm onto which the tubular is placed prior to being supported by the support member.

28. A mobile tubular inspection device according to claim 27, wherein the support arm extends from the frame.

29. A mobile tubular inspection device according to any of claims 20 to 28, further comprising a tubular movement mechanism which provides for movement of the tubular, with respect to the frame, along its longitudinal axis.

30. A mobile tubular inspection device according to any of claims 17 to 29, further comprising an ultrasonic inspection means coupled to the mobile tubular inspection device.

31. A method of inspecting a tubular, the method comprising:-
transporting a tubular inspection device to a location in relatively close proximity to a site where the tubular to be inspected is situated, the tubular inspection device having an electro-magnetic inspection means associated therewith;
operating a rotation mechanism associated with the tubular inspection device to provide for rotation of the tubular, the electro-magnetic inspection means permitting analysis of defects of the tubular.
